# EUROPEAN PATENT APPLICATION

(11) **EP 1 585 010 A2**
(43) Date of publication of application: **12.10.2005**
(21) Application number: 05252162.2
(22) Date of filing: 06.04.2005
(51) Int. Cl.: G06F 1/00

(54) **License creation apparatus and method**

(30) Priority: 09.04.2004 JP 2004115662
(71) Applicant: SONY CORPORATION, Tokyo 141 (JP)
(72) Inventor: Ebihara, Munetake c/o IPD Sony Corporation, Tokyo 141 (JP); Sato, Ichiro c/o IPD Sony Corporation, Tokyo 141 (JP); Kuno, Hiroshi c/o IPD Sony Corporation, Tokyo 141 (JP); Soma, Shunichi c/o IPD Sony Corporation, Tokyo 141 (JP); Ichikawa, Hiroyuki c/o IPD Sony Corporation, Tokyo 141 (JP); Hayashi, Takamichi c/o IPD Sony Corporation, Tokyo 141 (JP); Imanishi, Keiho c/o IPD Sony Corporation, Tokyo 141 (JP)
(74) Representative: Mills, Julia

(57) **Abstract**

The present invention is intended to create a license for a new piece of digital content created by linking two or more pieces of digital content. A license creation apparatus has a link ID acquisition block, a link pattern storage block, and a license creation block. The link ID acquisition block acquires a link ID from a license of digital content. The link pattern storage block stores a link ID combination and license creation information for determining contents of the license to be created, in a related manner. The license creation block creates a license. The license creation block acquires two or more link IDs from a link ID acquisition block and acquires license creation information related to a combination of these two or more link IDs from a link pattern storage block. The license creation block creates a license on the basis of this license creation information.

## Description

The present invention relates to the field of license creation apparatus, license creation methods, and a computer program.

Technologies are known in which digital content is given with a license containing digital license attribute information such as content use conditions, thereby restricting the use of digital content. The use conditions include the number of times content may be reproduced, the period in which content may be reproduced or the expiration time up to which content may be reproduced, and the number of times content may be reproduced, for example. Each user is able to use digital content concerned in accordance with the attached license.

If it is practicable for two or more pieces of digital content to be combined together to create a new piece of digital content, it would be convenient for each user to edit digital content, such as embedding a part of one piece of digital content into another piece of digital content and extracting desired parts of a plurality of pieces of digital content to create a desired new piece of digital content, for example.

It should be noted that, if the above-mentioned license is given to each piece of digital content to be combined with another, it would be desirable for a new created piece of digital content to be given with the license.

However, because it is difficult to create a new license by considering a different use condition for each license, the license cannot be created and given to the digital content newly created by linking, thereby disabling the linkage of two or more pieces of digital content.

Embodiments of the present invention seek to provide a license creation apparatus and a license creation method that are capable of creating a license for a piece of digital content newly created by linking two or more pieces of digital content.

One aspect of the present invention provides a license creation apparatus comprising: a link ID acquisition block for acquiring link IDs from licenses of digital content; a link pattern storage block for storing, in a related manner, a combination of the link IDs and license creation information for determining contents of a license to be created; and a license creation block for creating a license; wherein the license creation block acquires at least two link IDs from the link ID acquisition block and acquires the license creation information related to a combination of the at least two link IDs from the link pattern storage block, thereby creating a license on the basis of the license creation information.

Digital content is made up of electronic data such as text, image, video, or music, for example. The license includes the attribute information such as use conditions associated with the reproduction or duplication of digital content. The contents of each license are determined by determining the attribute information and so on of that digital content. Each license is related to a piece of digital content that is restricted in use by the license related thereto. To be more specific, each license may be linked to digital content by an ID or embedded in digital content, for example.

The combinations of link IDs include a combination of same link IDs and a combination of different link IDs. The number of link IDs that forms a combination is at least two.

The link pattern storage block is a database for example that is stored in a memory or a hard disk arranged in the above-mentioned license creation apparatus.

According to the above-mentioned configuration, a link ID is contained in a license for each piece of digital content, the link ID is read from each license corresponding to each piece of digital content to be linked with another, and by a combination of the link IDs, the license creation information related beforehand to this combination is read from the link pattern storage block. The license creation information is the information for determining the contents of each license, so that a new license is created on the basis of the license creation information. Consequently, a license for a new piece of digital content that is created by linking two or more pieces of digital content may be easily created by use of the link ID included in each license and the information stored in the link pattern storage block.

The above-mentioned license creation information preferably includes the attribute information of the digital content corresponding to license. The attribute information denotes a use condition and so on associated with the reproduction or duplication of digital content and determines the contents of each license. This configuration allows inclusion of the license creation information acquired from the link pattern storage block into a new license without change.

The above-mentioned license creation information preferably includes rules for determining the attribute information of digital content corresponding to the license. The rules for determining the attribute information uniquely determine such attribute information as use conditions. This configuration allows the creation of new licenses by acquiring the attribute information by executing the processing in accordance with the license creation information acquired from the link pattern storage block and including this attribute information into each new license.

The above-mentioned configuration also allows deriving various kinds of attribute information depending on how the rules are defined, leading to flexible license creation. For example, if rules are adopted by which original license attribute information values are referenced for use in a new license, the most recent status of each original license may be reflected onto a new license in the case of attribute information such as reproducible count that changes in value every time reproduction is made. Also, as with the above-mentioned average, a value that is not included in the original license at all may be included in a new license.

The above-mentioned licenses include link permission information indicative of whether to permit linking of one piece of digital content corresponding to the license and another piece of digital content corresponding to the license, and the link ID acquisition block acquires the link ID only from the license that permits linking of the pieces of digital content on the basis of the link permission information. Because the link permission information is included in the license, this configuration allows the determination of permission of linking digital content, license by license. Consequently, the linking of one piece of digital content with another may be permitted or prohibited depending on users to whom the licenses are issued, even if the content is the same.

The above-mentioned license creation apparatus connected, via a communication network, with a link pattern creation server for creating the combination of link IDs and the license creation information, may further have a link pattern receiver block for receiving the combination of link IDs and the license creation information from the link pattern creation server and a link pattern update block for updating storage contents of the link pattern storage block on the basis of the combination of link IDs and the license creation information received by the link pattern receiver block. This configuration allows the reception of the combination of link IDs and the license creation information created by the link pattern creation server via the communication network and the updating of the storage contents of the link pattern storage block by the received information, thereby keeping the storage contents of the link pattern storage block to the most recent status. Consequently, if the number of combinations of link IDs increases or the attribute information for determining license contents is newly arranged, the license creation apparatus is capable of reflecting these changes onto the link pattern storage block for license creation.

The above-mentioned license creation apparatus may further have a content creation block for creating a new piece of digital content by linking at least two pieces of digital content that are related to at least two licenses of which link IDs have been acquired by the link ID acquisition block. Each license created by the license creation block is related to the new piece of digital content. This configuration allows the user to link two or more pieces of digital content in the license creation apparatus to create a new piece of digital content.

It should be noted that a relation of a license to a particular piece of digital content may be implemented by arranging a content ID for uniquely identifying content into a license or embedding a license into digital content. The linking of two or more pieces of digital content includes the editing of digital content such as linking of two or more pieces of digital content directly, embedding a part of a piece of digital content into another piece of digital content, and linking of desired parts extracted from two or more pieces of digital content.

Another aspect of the present invention provides a computer program for making a computer function as the above-mentioned license creation apparatus.

A further aspect of the present invention provides, a license creation method comprising the steps of: storing a combination of link IDs included in licenses of digital content and license creation information for determining contents of a license to be created into a link pattern storage block in a related manner; acquiring link IDs from licenses of at least two pieces of digital content; searching the link pattern storage block for the combination of link IDs on the basis of the at least two link IDs; acquiring the license creation information, from the link pattern storage block, the license creation information stored as related to the combination of link IDs retrieved by the link pattern search step; and creating a license on the basis of the acquired license creation information.

Another aspect of the present invention provides a computer program operable to perform a method according to the further aspect of the present invention.

A license creation apparatus and a license creation method are described that are capable of creating a license to be given to a new piece of digital content created by linking two more pieces of digital content.

The invention will now be described by way of example with reference to the accompanying drawings, throughout which like parts are referred to by like references, and in which:
FIG. 1 is a block diagram illustrating an exemplary configuration of a license creation apparatus practiced as a first embodiment of the invention;
FIG. 2 is a diagram illustrating an exemplary structure of a license according to the first embodiment;
FIG. 3 is a diagram illustrating exemplary storage contents of a link pattern storage block according to the first embodiment;
FIG. 4 is a diagram illustrating digital content link processing according to the first embodiment;
FIG. 5 is a flowchart indicative of the digital content link processing according to the first embodiment;
FIG. 6 is a diagram illustrating an exemplary structure of a link ID according to a second embodiment of the invention;
FIG. 7 is a diagram illustrating storage contents in a link pattern storage block according to the second embodiment;
FIG. 8 is a diagram illustrating license creation processing according to the second embodiment; and
FIG. 9 is a diagram illustrating the license creation processing according to the second embodiment.

The following describes in detail preferred embodiments of the present invention with reference to accompanying drawings. It should be noted that, throughout the description herein and the accompanying drawings, components having substantially the same functions are denoted by the same reference numerals and the duplicate description thereof will be skipped.

### First Embodiment

In the first embodiment of the present invention, a license creation apparatus according to an embodiment of the invention is described as applied to a license creation apparatus 100 that is capable of linking two or more pieces of digital contents to create a new piece of digital content.

First, a hardware configuration of the license creation apparatus 100 will be approximately described. As described above, the license creation apparatus 100 is an information processing apparatus capable of creating a license to be given to a new piece of digital content that is formed by linking two or more pieces of digital content.

Also, the license creation apparatus 100 according to the first embodiment is capable to creating a new piece of digital content attached with a created license. Digital content is made up of electronic data such as text, image, video, or music, for example.

For the license creation apparatus 100 to create a license and digital content, it is desirable that the license creation apparatus 100 be capable of reproducing any one or two or more pieces of the above-mentioned digital content. Therefore, the license creation apparatus 100 may be implemented by a personal computer (PC), a PDA (Personal Digital Assistant) or other portable terminals, a mobile phone, audio equipment, a television set, or a game machine, for example.

The license creation apparatus 100 has a CPU, a ROM, a RAM, and a hard disk, for example. The CPU, functioning as a computation unit and a control unit, is capable of controlling the components of the license creation apparatus 100. The ROM and RAM have capabilities of temporarily storing various data necessary for the processing to be executed by the CPU and CPU operating programs, for example.

The hard disk is a data storage unit made up of a hard disk drive or a flash memory, for example, and is capable of storing an operating system (OS) and various application programs. This hard disk also stores a license storage block 104, a content storage block 114, and a link pattern storage block 120, for example, to be described later. It should be noted that the above-mentioned storage blocks may be arranged in the ROM or the RAM rather than on the hard disk, or on external recording media such as CD (Compact Disk) or MD (Mini Disk), for example.

The license creation apparatus 100 may also have a communication interface for receiving, via a communication network, license creation information to be described later from a link pattern creation server that is an external information processing apparatus and an input unit and a display unit by which the user executes editing processing at linking digital content.

Thus, the hardware configuration of the license creation apparatus 100 has been outlined. The following describes a functional configuration of the license creation apparatus 100 according to the first embodiment.

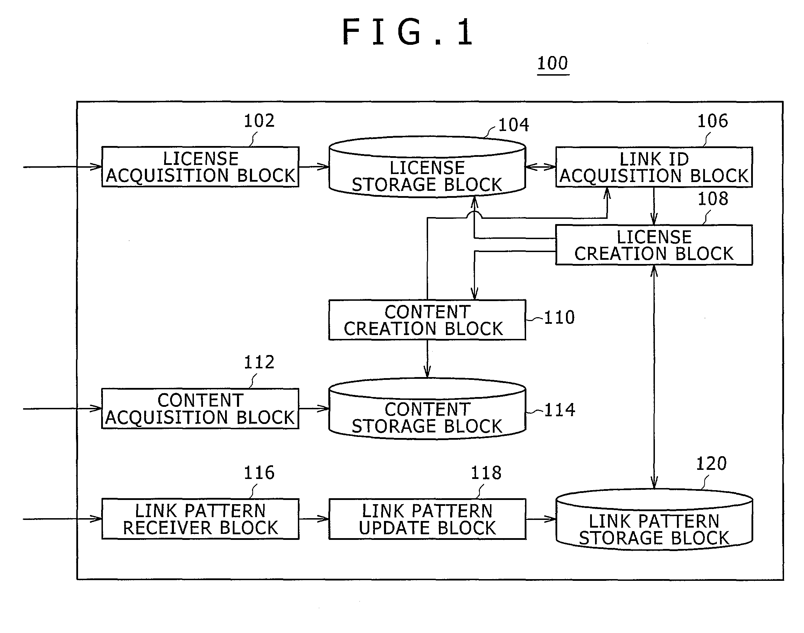

As shown in FIG. 1, the license creation apparatus 100 has a license acquisition block 102, the license storage block 104, a link ID acquisition block 106, a license creation block 108, a content creation block 110, a content acquisition block 112, the content storage block 114, a link pattern receiver block 116, a link pattern update block 118, and the link pattern storage block 120, for example.

The license acquisition block 102 has a capability of acquiring a license for digital content from an external information processing apparatus via a communication interface of the license creation apparatus 100. Alternatively, the license acquisition block 102 may execute license acquisition processing by reading a license from an external storage medium such as floppy disk or CD for example.

"License" herein denotes is information that is used to restrict the use of digital content and therefore includes such attribute information as use conditions associated with the reproduction and replication of digital content, for example. Each license, being linked to digital content by ID, embedded in digital content, or in other appropriate manners, is related with the digital content that is restricted in use by that license. In the first embodiment, a content ID for uniquely identifying digital content is incorporated in that license so as to provide correlation between license and digital content.

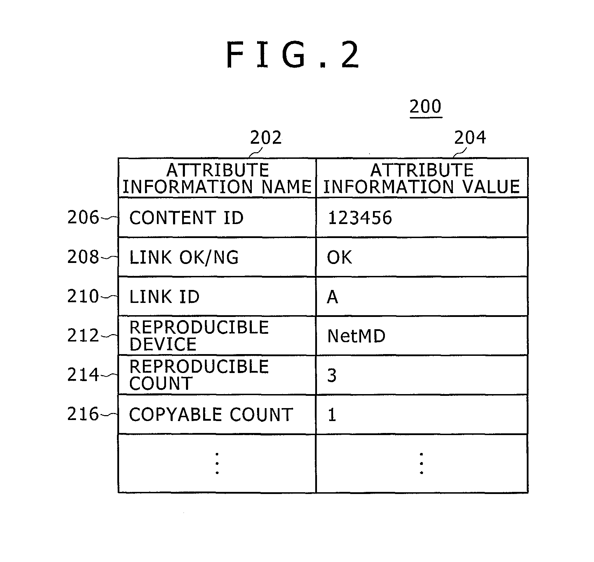

The license storage block 104 has a capability of storing a license acquired by the license acquisition block 102. The following describes the license according to the first embodiment with reference to FIG. 2.

The attribute information is included in each license. As shown in FIG. 2, a combination of an attribute information name 202 and a corresponding attribute information value 204 may represent attribute information, for example.

The attribute information names for making up the attribute information may be a content ID 206, a link OK/NG 208, a link ID 210, a reproducible device 212, a reproducible count 214, or a copyable count 216, for example. The attribute information value 204 stores a value corresponding to each of these names. The link OK/NG 208 is one example of link enable/disable information; if the value thereof is "OK" as shown, it indicates that the linking of digital content is permitted and, if the value is "NG", it indicates that the linking of digital content is prohibited.

According to the example of FIG. 2, a license 200 corresponds to the digital content that is identified by content ID "123456", permits this digital content to be linked with another piece of digital content, and has link ID "A" that is referenced by the link ID acquisition block 106 in linking. A device that is capable of reproducing the corresponding digital content is "NetMD", the number of times this digital content can be reproduced is up to three, and the number of times this digital content can be copied is only once. The attribute information may further include the period in which digital content is reproducible or the expiration time after which digital content cannot be reproduced and the number of times digital content can be written to external recording media, for example.

Referring to FIG. 1 again, the description of the license creation apparatus 100 is made below. The link ID acquisition block 106 has a capability of getting a link ID from the license stored in the license storage block 104. To be more specific, when the user links two or more pieces of digital content, the content creation block 110 gets the content IDs uniquely identifying these pieces of digital content and supplies the acquired content IDs to the link ID acquisition block 106. On the basis of the content IDs received from the content creation block 110, the link ID acquisition block 106 searches the license storage block 104 for the licenses having the corresponding content IDs, thereby getting the link IDs from the acquired licenses.

It should be noted that, before acquiring the link ID from the license, the link ID acquisition block 106 may check if that license permits the linking of digital content by the value set to the link OK/NG 208 stored in the license and, if the linking is not permitted, notify the content creation block 110 of the disability of the linking of that digital content by returning an error message for example.

The license creation block 108 has a capability of getting two or more link IDs from the link ID acquisition block 106 and getting the license creation information related with the combination of the two or more acquired link IDs from the link pattern storage block 120, thereby creating a license on the basis of that license creation information.

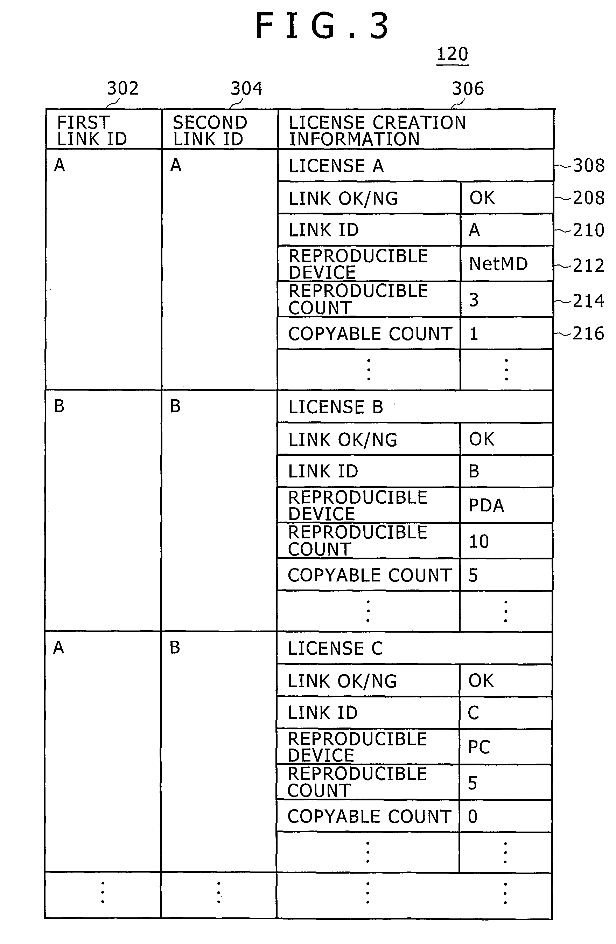

To be more specific, the license creation block 108 is provided with the link IDs acquired by the link ID acquisition block 106 from the licenses corresponding to two or more pieces of digital content subject to linking and searches the link pattern storage block 120 for a combination of these link IDs. The following describes the link pattern storage block 120 with reference to FIG. 3 and describes one example of the license creation method of the license creation block 108.

Referring to FIG. 3, there is shown one example of the storage contents of the link pattern storage block 120, in which link ID combinations and license creation information are stored. Subsequently, one combination of link IDs and the license creation information related with this combination are referred to as a link pattern as one set.

Each link pattern is made up of a first link ID 302 and a second link ID 304 for forming a combination of link IDs, and license creation information 306. In the first embodiment, two link IDs form a combination. If three or more pieces of digital content are linked, license creation information is acquired by sequentially creating combinations each formed by two link IDs, finally creating one license. Alternatively, any other number of link IDs may be used to form one combination.

The license creation information 306 stores the attribute information for defining the contents of license. The license creation block 108 is capable of creating a new license by use of this attribute information without change. According to the example shown, if the first link ID 302 is "A" and the second link ID 304 is "B", then the license creation block 108 creates license C that has link OK/NG being "OK", link ID being "C", reproducible device being "PC", reproducible count being "5", copyable count being "0", and so on, as the attribute information stored as license creation information. This configuration allows the license creation block 108 to create a new license by use of the attribute information defined beforehand in the link pattern storage block 120, thereby quickly executing the processing.

The license creation block 108 writes the content ID to be given to the digital content to be newly created by linking to the created license, thereby relating the content ID to the digital content, and stores the resultant license into the license storage block 104.

Referring to FIG. 1 again, the following describes the license creation apparatus 100. The content creation block 110 has a capability of linking two or more pieces of digital content related to two or more licenses with the link IDs thereof acquired by the link ID acquisition block, thereby creating a new piece of digital content.

To be more specific, the content creation block 110 gets two or more pieces of digital content subject to linking from the content storage block 114. Next, when the license for a new piece of digital content has been created by the license creation block 108, the content creation block 110 gets the content ID to given to that new digital content from the license creation block 108. Having received the content ID, the content creation block 110 links the two or more pieces of original digital content into the new piece of digital content on the basis of a command by the user entered through the input unit of the license creation apparatus 100 for example, gives the content ID received from the license creation block 108 to the newly created digital content, and stores the newly created digital content attached with the content ID into the content storage block 114.

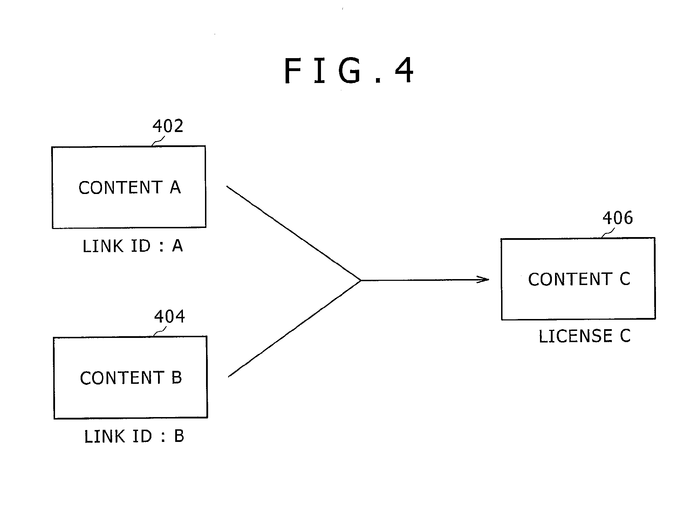

FIG. 4 schematically shows the above-mentioned linking of a plurality of pieces of digital content. In this example, content A 402 corresponding to a license having link ID "A" is linked with content B 404 corresponding to a license having link ID "B" into new content C406. New content C406 is given with license C having the attribute information defined in the link pattern storage block 120 by the combination of link ID "A" and link ID "B".

The content acquisition block 112 has a capability of getting digital content from external information processing apparatuses via a communication network. Alternatively, the content acquisition block 112 may get digital content from external recording media. The content storage block 114 has a capability of storing digital content. To be more specific, the content storage block 114 stores the digital content acquired by the content acquisition block 112 and the digital content created by the content creation block 110.

The link pattern receiver block 116 has a capability of receiving a combination of link IDs and license creation information from an external information processing apparatus. It is desirable for this external information processing apparatus to be a link pattern creation server that has a capability of creating a combination of link IDs and license creation information. A link pattern creation server is an information processing apparatus that is owned by a service provider that issues and manages licenses, for example. When a change takes place in the type of link ID or the attribute information to be included in a license due to license version upgrade by the service provider, the updated information is transmitted from the link pattern creation server to the license creation apparatus 100.

The link pattern receiver block 116 receives the updated information from the above-mentioned link pattern creation server and provides the received information to the link pattern update block 118. On the basis of the information received from the link pattern receiver block 116, the link pattern update block 118 updates the contents of the link pattern storage block 120. This configuration allows the types of changed link IDs and the changed attribute information to be reflected onto the link pattern storage block 120, so that, if change takes place in license structure for example, the license creation block 108 is capable of creating a license having a changed structure.

It should be noted that the link pattern receiver block 116 may receive each piece of the above-mentioned information when the user makes registration with the above-mentioned service provider for receiving license for the license creation apparatus 100 or when the user gets digital content or a license thereof. Alternatively, the link pattern receiver block 116 may receive each piece of the above-mentioned information from an external medium rather than from the link pattern creation server via a communication network.

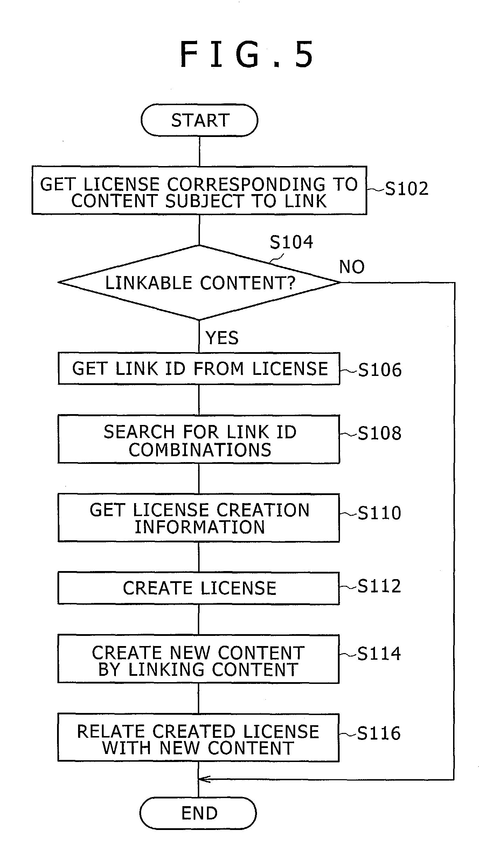

Thus, the functional configuration of the license creation apparatus has been described. The following describes a flow of the digital content link processing including license creation processing that is executed by the license creation apparatus 100 according to the first embodiment with reference to FIG. 5.

First, in step S102, the link ID acquisition block 106 of the license creation apparatus 100 gets the licenses corresponding to digital content subject to linking from the license storage block 104 (S102). Next, the link ID acquisition block 106 references the link OK/NG information in each acquired license to check if this license permits the linking of digital content (S104). If the linking is not permitted, this processing is ended.

On the other hand, if the linking is permitted, the link ID acquisition block 106 gets the link ID from each license (S106). Next, the license creation block 108 searches the link pattern storage block 120 for a combination of these link IDs (S108), gets the license creation information related to the combination concerned (S110), and creates a new license on the basis of the acquired license creation information (S112).

Because the license for the digital content to be newly created has thus been created, the content creation block 110 links, in step S114, the two or more pieces of original digital content into a new piece of digital content (S114) and relates the created license with the created digital content by use of the content ID for example (S116).

Thus, the flow of the content creation processing has been described. With the license creation apparatus 100 according to the first embodiment, the attribute information for defining the contents of license is stored in the link pattern storage block 120 beforehand as license information, so that the license creation block 108 is capable of creating new licenses by including this information in each license. Consequently, if the license for a piece digital content subject to linking has a different structure due to version upgrading thereof for example, a new license may be created as long as both licenses for pieces of digital content subject to linking have link IDs.

### Second Embodiment

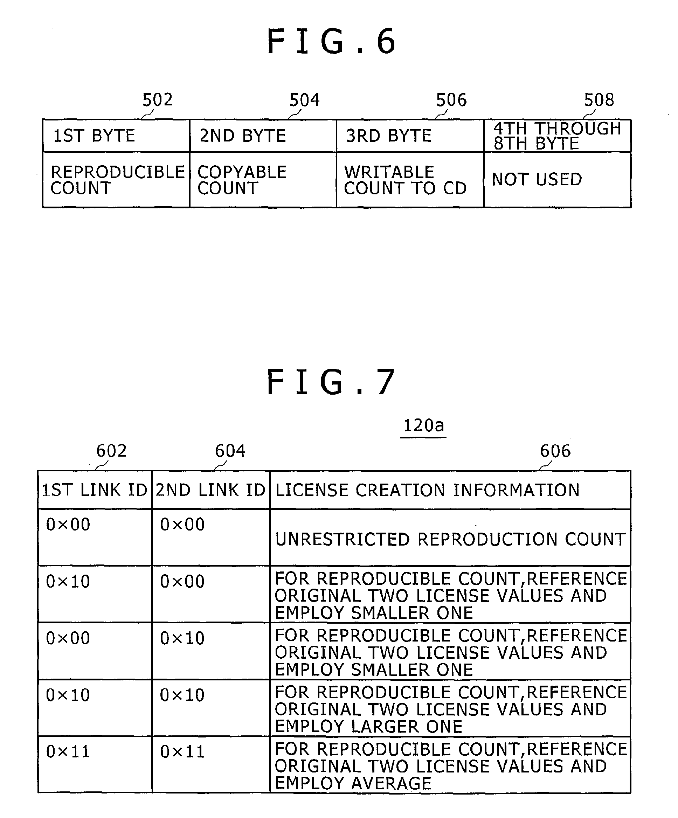

The following describes a license creation apparatus practiced as a second embodiment of the invention with reference to FIGS. 6 through 9. The license creation apparatus according to the second embodiment is substantially the same in configuration as the license creation apparatus according to the first embodiment except for the structure of link ID included in each license, the contents of the link pattern storage block, and the license creation method of the license creation block based on these storage contents, so that the description of the similar components will be skipped.

FIG. 6 shows an exemplary structure of a link ID according to the second embodiment. As shown, each link ID is 8-byte wide and, if the link ID is created on the basis of a combination of these bytes in a link pattern storage block, more various licenses may be created than with the first embodiment. To be more specific, a first byte 502 of an 8-byte link ID is a part for defining reproducible count to be included in the license to be created, a second byte 504 is a part for defining copyable count, and a third byte is a part for defining the number of times data may be written to CD. The fourth through eighth bytes are not used in the second embodiment; however, these may be used as required. The following describes in detail the license creation method by the license creation block by use of an example in which the first byte, reproducible count, is defined.

FIG. 7 shows a part of the storage contents of the link pattern storage block of the second embodiment. As described above, the link pattern storage block stores byte combinations and license creation information in a related manner. In 120a, combinations of the first byte of link ID are stored in a first link ID 602 and a second link ID 604 and rules for defining reproducible count are stored in license creation information 606. In the first embodiment, attribute information is stored in the license creation information and reproducible count is stored beforehand. In the second embodiment, the rule for deriving attribute information is stored.

According to the example shown in FIG. 7, if the values of the first bytes of two link IDs are both "0x00" (in hexadecimal notation of 8 bits; subsequently the same), then the license creation block sets infinite ("-1" for example as attribute information value) to reproducible count among the attribute information to be included in the license to be created. Likewise, in the case of a combination of "0x10" and "0x00", the license creation block references the reproducible count values in both licenses to select the value whichever is smaller as the attribute information value of the license to be created. If both are "0x10", then the license creation block references the reproducible count values in both licenses and selects the value whichever is greater as the attribute information value. If both are "0x11", then the license creation block references the reproducible count values in both licenses and uses an average as the attribute information value of the license to be created. It is also practicable to determine a reproducible count value beforehand, thereby making it unnecessary for the license creation block to reference original license values.

The above-mentioned configuration allows deriving various kinds of attribute information depending on how rules are defined, thereby providing flexible license creation. For example, if rules are adopted by which original license attribute information values are referenced for use in a new license, the most recent status of each original license may be reflected onto a new license in the case of attribute information such as reproducible count that changes in value every time reproduction is made. Also, as with the above-mentioned average, a value that is not included in the original license at all may be included in a new license.

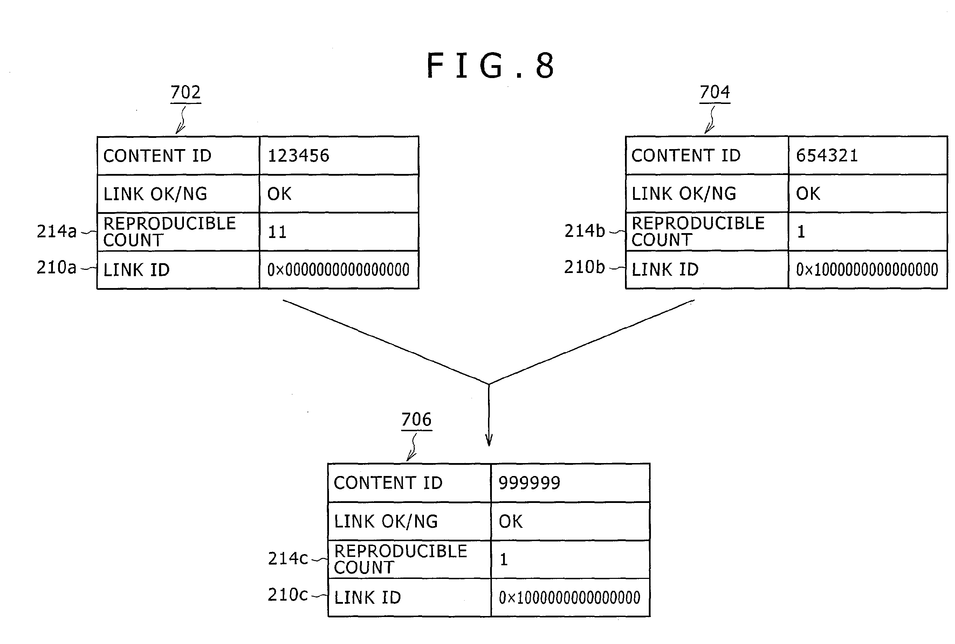

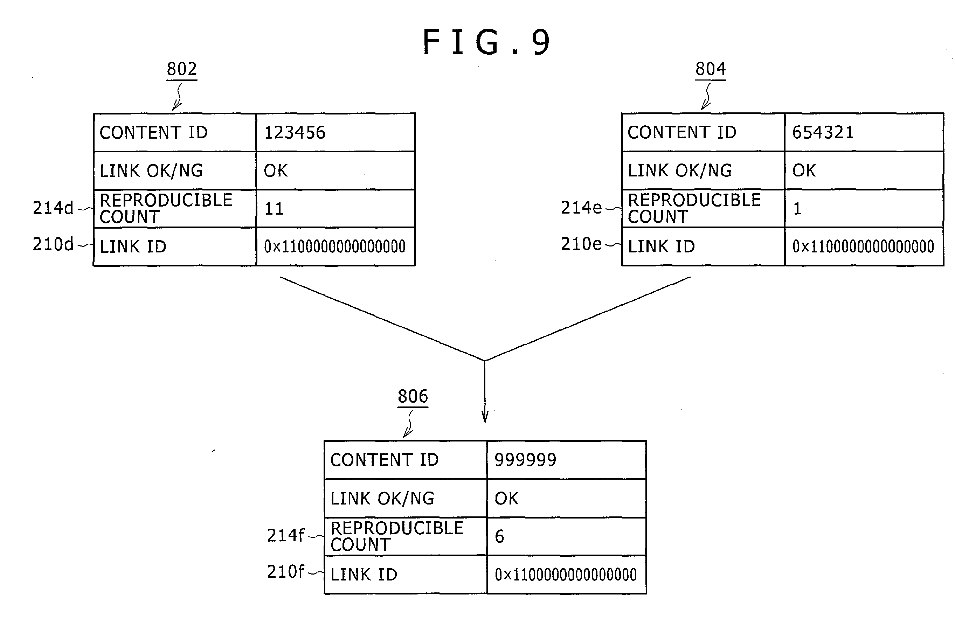

FIGS. 8 and 9 describe the above-mentioned license creation method. The license creation block references the link ID of original licenses 702 and 704 to create a new license 706. A first byte of a link ID 210a of the license 702 is "0x00" and a first byte of a link ID 210b of the license 704 is "0x10", so that value "11" of the reproducible count 214a of the license 702 or value "1" of the reproducible count 214b of the license 704, whichever is smaller, namely, "1", is set to the reproducible count 214c of the new license 706. The link ID of the license 704 using the value of reproducible count is stored in the link ID 210c.

Referring to FIG. 9, the license creation block references the link IDs of original licenses 802 and 804 to create a new license 806. A first byte of a link ID 210d of the license 802 is "0x11" and a first byte of a link ID 210e of the license 804 is also "0x11", so that average value "6" between value "11" of a reproducible count 214d of the license 802 and value "1" of reproducible count 214e of the license 804 is set to a reproducible count 214f of the new license 806. The same ID as both original licenses is stored in a link ID 210f.

Thus, the license creation method according to the second embodiment has been described. With the license creation apparatus according to the second embodiment, the rules for defining the attribute information to be included in each license are stored in the link pattern storage block as license information. On the basis of these rules, the license creation block may derive the attribute information and include the derived attribute information in each license, thereby creating new licenses. Consequently, dependent on how rules are defined, the license creation apparatus may create various licenses and reflect the attribute information values of an original license onto a new license.

The license creation apparatuses and methods according to the first and second embodiments of the invention are capable of creating, by use of link IDs and a link pattern storage block, a license to be given to a new piece of digital content created by linking two or more pieces of digital content. In addition, the license creation apparatuses according to the first and second embodiments is capable of updating the storage contents of the link pattern storage block, so that a service provider that issues and manages licenses may change the storage contents by transmitting link ID combinations and license creation information for example, thereby executing the processing by reflecting a change in license structure for example onto the license creation apparatuses.

While preferred embodiments of the present invention have been described using specific terms, such description is for illustrative purpose only, and it is to be understood that changes and variations may be made without departing from the scope of the following claims.

Embodiments of the present invention are applicable to license creation apparatuses, especially, license creation apparatuses that create a license for a new piece of digital content created by linking two or more pieces of digital content.

Various respective aspects and features of the invention are defined in the appended claims. Features from the dependent claims may be combined with features of the independent claims as appropriate and not merely as explicitly set out in the claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A license creation apparatus comprising:
a link ID acquisition block for acquiring link IDs from licenses of digital content;
a link pattern storage block for storing, in a related manner, a combination of said link IDs and license creation information for determining contents of a license to be created; and
a license creation block for creating a license;
wherein said license creation block acquires at least two link IDs from said link ID acquisition block and acquires said license creation information related to a combination of said at least two link IDs from said link pattern storage block, thereby creating a license on the basis of said license creation information.

2. The license creation apparatus according to claim 1, wherein said license creation information includes attribute information of digital content corresponding to each license.

3. The license creation apparatus according to claim 1, wherein said license creation information includes a rule for defining attribute information of digital content corresponding to a license.

4. The license creation apparatus according to claim 1, wherein said licenses include link permission information indicative of whether to permit linking of one piece of digital content corresponding to said license and another piece of digital content corresponding to said license, and said link ID acquisition block acquires said link ID only from the license that permits linking of said pieces of digital content on the basis of said link permission information.

5. The license creation apparatus according to claim 1 connected, via a communication network, with a link pattern creation server for creating said combination of link IDs and said license creation information, further comprising:
a link pattern receiver block for receiving said combination of link IDs and said license creation information from said link pattern creation server; and
a link pattern update block for updating storage contents of said link pattern storage block on the basis of said combination of link IDs and said license creation information received by said link pattern receiver block.

6. The license creation apparatus according to claim 1, further comprising:
a content creation block for creating a new piece of digital content by linking at least two pieces of digital content that are related to at least two licenses of which link IDs have been acquired by said link ID acquisition block, wherein each license created by said license creation block is related to said new piece of digital content.

7. A license creation method comprising the steps of:
storing a combination of link IDs included in licenses of digital content and license creation information for determining contents of a license to be created into a link pattern storage block in a related manner;
acquiring link IDs from licenses of at least two pieces of digital content;
searching said link pattern storage block for said combination of link IDs on the basis of said at least two link IDs;
acquiring said license creation information, from said link pattern storage block, said license creation information stored as related to said combination of link IDs retrieved by said link pattern search step; and
creating a license on the basis of said acquired license creation information.
